Europäisches Patentamt

European Patent Office

Office européen des brevets

(19)

(11)  **EP 0 536 683 B1**

(12)  **EUROPÄISCHE PATENTSCHRIFT**

(45) Veröffentlichungstag und Bekanntmachung des
Hinweises auf die Patenterteilung:
**28.08.1996  Patentblatt 1996/35**

(51) Int. Cl.$^6$: **B23K 26/06**

(21) Anmeldenummer: **92117015.5**

(22) Anmeldetag: **06.10.1992**

(54) **Vorrichtung zur Führung eines Laserstrahls**

Apparatus for guiding a laser beam

Appareil de guidage d'un rayon laser

(84) Benannte Vertragsstaaten:
**AT BE CH DE DK ES FR GB IT LI NL SE**

(30) Priorität: **08.10.1991 DE 4133305**

(43) Veröffentlichungstag der Anmeldung:
**14.04.1993  Patentblatt 1993/15**

(73) Patentinhaber: **Zweckform Büro-Produkte GmbH
D-83602 Holzkirchen (DE)**

(72) Erfinder: **Zschaeck, Michael
W-8000 München 70 (DE)**

(74) Vertreter: **Ritter und Edler von Fischern,
Bernhard,Dipl.-Ing. et al
Hoffmann, Eitle & Partner,
Patentanwälte,
Postfach 81 04 20
81904 München (DE)**

(56) Entgegenhaltungen:
**EP-A- 0 329 438          US-A- 3 558 208
US-A- 3 832 718**

• **PATENT ABSTRACTS OF JAPAN vol. 13, no. 154
(M-814)(3502) 14. April 1989 & JP-A-63 317 270
(KOMATSU LTD.) 26. Dezember 1988
"Zusammenfassung"**

Anmerkung:    Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

EP 0 536 683 B1

## Beschreibung

Die Erfindung betrifft eine Vorrichtung zur Führung eines Laserstrahls.

In zahlreichen industriellen Anwendungen werden Laser zur Bearbeitung von verschiedenartigen Materialien eingesetzt; beispielsweise dienen Laser auf dem papierverarbeitenden Sektor zum Schneiden oder Perforieren von Papier. Bei der Papierverarbeitung, wie bei vielen anderen Anwendungen auch, werden an die Eigenschaften des Laserstrahls höchste Anforderungen gestellt. Diese Anforderungen findet man bei den Vorrichtungen wieder, die zur Erzeugung und Führung des Laserstrahls verwendet werden. Insbesondere die Anforderungen im Hinblick auf die Laserstrahlbewegungen, d.h. dessen Lage, Verlauf, Bewegungsrichtung und -geschwindigkeit sind aber nur schwer zu erfüllen. Denn die Ablenkung oder Führung eines Laserstrahls und in der Regel auch dessen Fokussierung kann nur mit Hilfe von bewegten Komponenten erfolgen, die durch ihre eigene Bewegung den Laserstrahl ablenken, führen oder fokussieren.

Bei den Vorrichtungen zur Führung bzw. Ablenkung eines Laserstrahls mehrere grundlegende Konzepte bekannt; zum einen seien hier die Vorrichtungen aus DE 23 50 953 C3 und DE 24 58 656 A1 genannt, die Kipp- oder Polygonspiegel in einer oder mehreren Gruppen aufweisen und bei denen der Laserstrahl aufgrund der Kippbewegung bzw. der Rotation des Spiegels abgelenkt wird. Diese Gruppe der bekannten Vorrichtungen erfüllt die eingangs erwähnten Anforderungen aber nur teilweise oder nur mit einem erheblichen Aufwand. So sind beispielsweise bei den Kipp- oder Polygonspiegelanordnungen neben der Antriebseinrichtung für den bzw. die Spiegel, die die bei hohen Ablenkgeschwindigkeiten und -beschleunigungen sich erheblich auswirkende Massenträgheit der bewegten Komponenten beherrschen muß, aufwendige Fokussierungssysteme erforderlich, um den Änderungen der Weglänge des Laserstrahls Rechnung zu tragen, die auf dessen zumindest bereichsweise auftretende Schrägstellung bezogen auf die Bearbeitungsebene zurückzuführen sind.

Aus US-A-3.832.718 ist eine Vorrichtung zur Führung eines Laserstrahls bekannt, die die Merkmale des Oberbegriffs des Patentanspruchs 1 aufweist. Auf einer zylindrischen Trägerwalze ist eine reflektierende Fläche angeordnet, die sich auf der Mantelfläche der Trägerwalze entlang einer spiralförmigen Bahn erstreckt und radial aus der Mantelfläche der Trägerwalze herausragt. Die Vorrichtung ist Teil eines Laserdruckers oder eines Kopierers. Um einen Laserstrahl zeilenweise über eine Bildtrommel zu führen, wird der Laserstrahl auf den spiralförmigen Spiegel gerichtet und von dort auf die Bildtrommel reflektiert. Bei rotierender Trägerwalze tastet der Laserstrahl die Bildtrommeloberfläche entlang einer zur Bildtrommelachse parallelen Mantellinie ab. Wird die Bildtrommel ebenfalls gedreht, geschieht eine zeilenweise Abtastung der gesamten Bildtrommeloberfläche.

Bei der Bearbeitung einer in Längsrichtung bewegten Materialbahn, insbesondere auf dem Gebiet der Papierverarbeitung mit sehr hohen Bahngeschwindigkeiten führt eine zur Bewegungsrichtung senkrechte und geradlinige Bewegung des bearbeitenden Laserstrahls aber zu einer Schrägstellung der Bearbeitungslinie auf der Materialbahn. Die Schrägstellung ist umso größer je höher die Bahngeschwindigkeit ist.

Ausgehend von diesem Stand der Technik liegt der Erfindung die Aufgabe zugrunde, eine Vorrichtung zur Führung eines Laserstrahls mit den Merkmalen des Obergriffs des Patentanspruchs 1 so weiterzubilden, daß die zuvor geschilderte Schrägstellung vermieden wird.

Gelöst wird diese Aufgabe durch eine Vorrichtung zur Führung eines Laserstrahls mit den Merkmalen des Patentanspruchs 1. Vorteilhafte Ausgestaltungen ergeben sich aus den Unteransprüchen.

Die Erfindung wird im folgenden anhand von Ausführungsbeispielen unter Bezugnahme auf die Zeichnungen genauer beschrieben, in denen zeigt:

Fig. 1A und 1B    eine schematische Darstellung eines Laserbearbeitungsvorganges einer Papierbahn,

Fig. 2    eine perspektivische Darstellung eines Ausführungsbeispiels der erfindungsgemäßen Vorrichtung zur Führung eines Laserstrahls,

Fig. 3A und 3B    eine schematische Darstellung der Abläufe beim Ausführungsbeispiel gemäß Fig. 2,

Fig. 4    eine geschnittene Darstellung eines Ausführungsbeispiels,

Fig. 5    eine geschnittene Darstellung eines Ausführungsbeispiels und

Fig. 6A bis 6C    eine schematische Darstellung der Abläufe bei dem Ausführungsbeispiel gemäß Fig. 5.

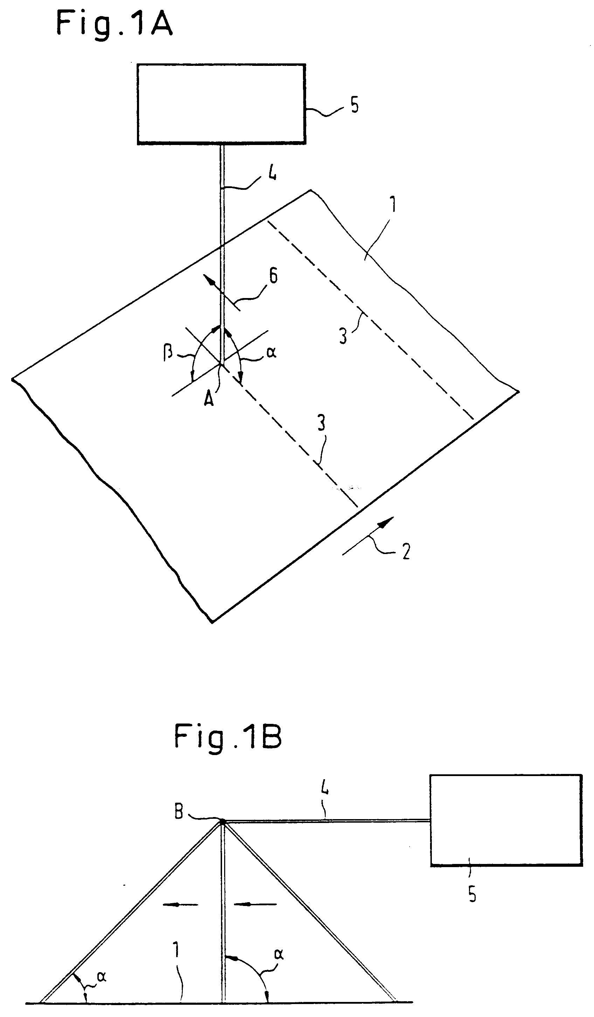

In den Figuren 1A und 1B ist eine Papierbahn 1 dargestellt, die während der Bearbeitung in Richtung des Pfeiles 2 bewegt wird. In die Papierbahn 1 werden durch die Bearbeitung beispielsweise Perforationen 3 in vorgegebenen Abständen zueinander eingebracht, wie dies etwa bei der Herstellung von Endlosformularen der Fall ist. Die Bearbeitung, d.h. das Einbringen der Perforation 3 erfolgt mit Hilfe eines Laserstrahls 4, der von einer Laserlichtquelle 5 abgegeben wird.

Der Laserstrahl 4 trifft am Auftreffpunkt A auf die Papierbahn 1 und bringt in die Papierbahn den Perforationsschnitt ein. Um beste Schnittergebnisse zu erzielen, steht der Laserstrahl 4 vorzugsweise senkrecht auf der Ebene der Papierbahn 1, so daß sowohl der Winkel alpha als auch der Winkel beta 90° beträgt. Dadurch wird gewährleistet, daß die Schnittlänge des Laserstrahls 4 im Papier minimal wird. Der Laserstrahl 4 wird in Richtung des Pfeiles 6, d.h. quer zur Bewegungsrichtung 2 der Papierbahn bewegt. Während der gesamten Bewegung des Laserstrahls 4 von einem Rand zum anderen Rand der Papierbahn 1 ist eine völlig gleichmässige Bearbeitung nur zu erreichen, wenn die Winkel alpha und beta unverändert bleiben, d.h. der Laserstrahl 4 während der gesamten Bewegung senkrecht auf der Ebene der Papierbahn 1 steht.

Bei den herkömmlichen Vorrichtungen treten aber aus verschiedenen Gründen die im folgenden unter Bezugnahme auf Fig. 1B beschriebene Probleme auf. Wenn nämlich der Laserstrahl 4, der von der Laserlichtquelle 5 abgegeben wird, am Ablenkpunkt B mit Hilfe von Kipp- oder Polygonspiegeln zur Papierbahn 1 abgelenkt wird, beträgt der Winkel alpha 90° nur in der mittleren Stellung des Laserstrahls. In allen anderen Stellungen ist der Laserstrahl zur Ebene der Papierbahn 1 geneigt, so daß der Winkel alpha vom Wert 90° abweicht. An den beiden Rändern der Papierbahn wird die Abweichung dabei systembedingt am größten. Hinzu kommt, daß sich der Weg, den der Laserstrahl vom Ablenkpunkt B zur Papierbahn 1 zurückzulegen hat, ebenfalls abhängig vom Verlauf des Laserstrahls verändert. Aus diesem Grund muß eine fortlaufende Korrektur der Fokussierung durchgeführt werden, wenn nicht in Kauf genommen wird, daß der Laserstrahl an bestimmten Punkten der Papierbahn 1 unvollständig fokussiert ist. Im Bereich der schräg einfallenden Laserstrahlen, also insbesondere am Rand der Papierbahn 1, durchläuft der Laserstrahl 4 das Papier schräg. Die Schnitttiefe im Papier ist daher länger als im mittleren Bereich der Papierbahn, so daß hier größere Laserleistungen erforderlich sind, um den Perforationsschnitt in das Papier einzubringen. Um ungleichmässige Schnitte zu verhindern, ist die Laserleistung daher an den momentanen Schnittbereich entsprechend anzupassen.

Durch die erfindungsgemässe Vorrichtung zur Führung eines Laserstrahls wird im Hinblick auf den Winkel alpha die Schrägstellung des Laserstrahls vermieden und ein stets senkrechter Einfall auf die Ebene der Papierbahn gewährleistet.

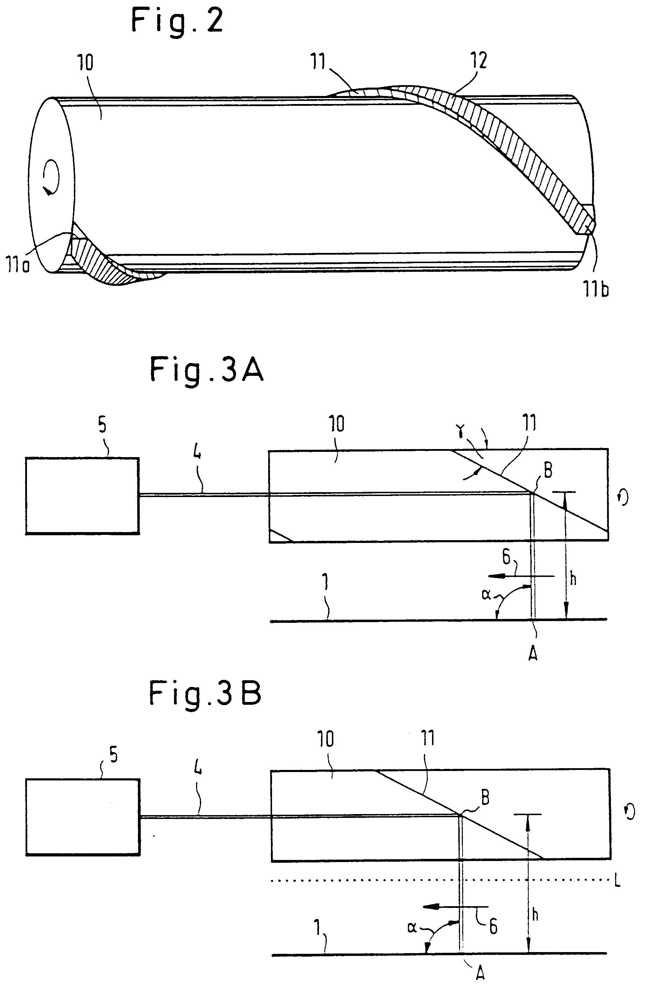

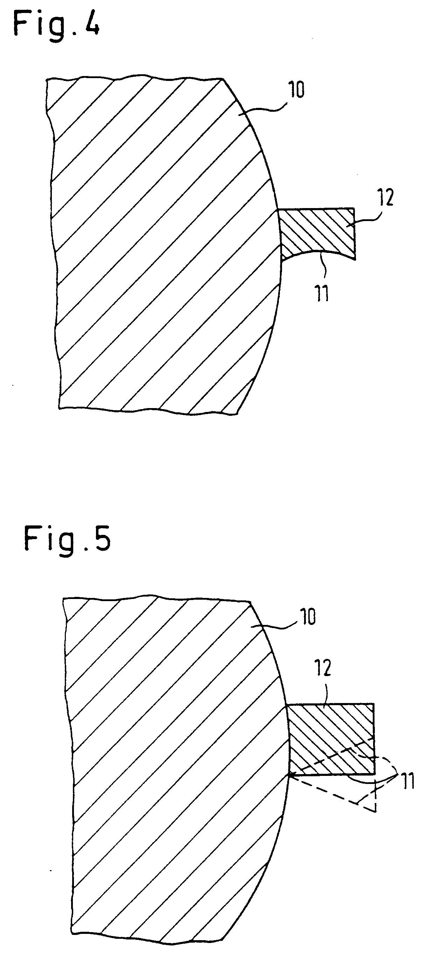

Die erfindungsgemäße Laserstrahl-Führungsvorrichtung ist dazu, wie in Fig. 2 dargestellt, aufgebaut aus einer zylindrischen Trägerwalze 10, auf deren Mantelfläche spiralförmig eine reflektierende Fläche 11 angebracht ist. Die reflektierende Fläche 11 ragt aus der Mantelfläche der Trägerwalze 10 im wesentichen radial heraus, ist aber bereichsweise bezogen auf die radiale Ausrichtung geneigt, was im Zussamenhang mit Fig. 5 noch näher erläutert wird. Die Fläche 11 ist bei dem in Fig. 2 dargestellten Ausführungsbeispiel Teil eines Bandes 12, das um die Mantelfläche der zylindrischen Trägerwalze 10 gewickelt und daran befestigt ist.

Die reflektierende Fläche 11 ist in der Darstellung der Fig. 2 in einzelne Segmente unterteilt, jedoch dient diese Unterteilung in erster Linie einer Verbesserung der perspektivischen Darstellung der räumlichen Verhältnisse. Im allgemeinen ist die reflektierende Oberfläche 11 des spiralförmig aufgewickelten Bandes 12 kontinuierlich, sofern nicht die beabsichtigte Anwendung eine Segmentierung der reflektierenden Oberfläche erfordert.

Die reflektierende Fläche 11 dient zur Führung bzw. Ablenkung eines im wesentlichen parallel zur Rotationsachse der Walze 10 einfallenden und nahe an der Manteloberfläche verlaufenden Laserstrahls. Rotiert die Walze 10 um ihre Längsachse, wandert der Ablenkpunkt des Laserstrahls entlang der reflektierenden Fläche 11. Der abgelenkte Laserstrahl verschiebt sich entsprechend der Wanderung des einfallenden Laserstrahls auf der reflektierenden Fläche 11 in Abhängigkeit von deren Ausgestaltung. Durch eine geeignete Formung der reflektierenden Fläche 11 kann der einfallende Laserstrahl stets so abgelenkt werden, daß der abgelenkte Laserstrahl sich parallel verschiebt. Ein senkrecht auf die zu bearbeitende Papierbahn einfallender Laserstrahl kann somit mit Hilfe der erfindungsgemässen Laserstrahl-Führungsvorrichtung quer zur Papierbahn bewegt werden, ohne daß im Hinblick auf den Winkel alpha die senkrechte Ausrichtung des Laserstrahls zur Ebene der Papierbahn aufgegeben werden muß. Die Ablenkgeschwindigkeit richtet sich im wesentlichen nach der Drehgeschwindigkeit der Trägerwalze 10. Aufgrund der nahezu rotationssymmetrischen Verteilung der Massen kann eine sehr hohe Drehgeschwindigkeit der Walze 10 und daher eine sehr hohe Verschiebegeschwindigkeit des abgelenkten Laserstrahls erreicht werden. Auch die Rückstellung des Laserstrahls erfolgt nahezu ohne Verzögerung, da bei einem Übergang des Laserstrahls vom Ende 11a zum Ende 11b der reflektierenden Fläche 11 der Laserstrahl schlagartig zurückgeführt wird.

Im folgenden wird dieser Vorgang anhand der Figuren 3A und 3B weiter verdeutlicht, in denen die Trägerwalze 10 und die reflektierende Fläche 11 nur schematisch dargestellt sind. Fig. 3A zeigt eine erste Drehstellung der Walze 10, die im wesentlichen der Stellung der Walze in der perspektivischen Darstellung der Fig. 2 entspricht. Fig. 3B zeigt eine weitere, fortgeschrittenere Drehstellung der Walze 10. Ferner ist der parallel zur Rotationsachse einfallende Laserstrahl 4 gezeigt, der nahe der Mantelfläche der Trägerwalze 10 verläuft und der von einer Laserlichtquelle 5 abgegeben wird.

Der Laserstrahl 4 trifft jeweils am Ablenkpunkt B auf die reflektierende Fläche 11 und wird von dort in Richtung auf die Papierbahn 1 abgelenkt. Der Winkel gamma, den die reflektierende Fläche 11 in der schematischen Darstellung der Figuren 3A und 3B mit der oberen Mantellinie der Walze 10 einnimmt, beträgt vorzugsweise 45°, insbesondere dann, wenn der Laserstrahl 4 parallel zur Rotationsachse der zylindrischen Walze 10 verläuft. Für diesen Fall gilt für das Verhältnis zwischen der Länge 1 und dem Durchmesser d der Walze 10 folgende Gleichung:

$$d = \frac{\ell \cdot \pi}{\sqrt{2}} \text{ (gamma = 45°)}$$

Der Laserstrahl 4 wird durch die reflektierende Fläche 11 am Ablenkpunkt B so abgelenkt, daß er im Auftreffpunkt A senkrecht auf die Papierbahn 1 auftrifft. Mit anderen Worten, der Winkel alpha zwischen dem Laserstrahl 4 und der Ebene der Papierbahn 1 beträgt 90°.

Wird die Trägerwalze 10 um ihre Längsachse gedreht, wie in Fig. 3A und 3B angedeutet, verschiebt sich der Ablenkpunkt B auf der reflektierenden Fläche 11 derart, daß der abgelenkte Laserstrahl und dessen Auftreffpunkt A sich in Richtung des Pfeiles 6 bewegt. Dabei bleibt die senkrechte Strahlführung des abgelenkten Laserstrahls erhalten, so daß der Winkel alpha weiterhin 90° beträgt. Durch eine volle Umdrehung der Walze 10 wird der abgelenkte Laserstrahl parallel von einem Rand zum anderen Rand der Papierbahn 1 verschoben, ohne daß sich der Einfallwinkel alpha ändert. Da somit der Laserstrahl stets senkrecht auf die Papierbahn 1 auftrifft, wird die Schnitttiefe im Papier durch die Verschiebung in Richtung des Pfeiles 6 nicht beeinflußt, so daß die Bearbeitung mit gleichbleibender Laserleistung durchgeführt werden kann und gleichförmige Schnitte erzielt werden.

Ferner bleibt die Weglänge des abgelenkten Laserstrahls unbeeinflußt, da sie zu jedem Zeitpunkt der Höhe h des Ablenkpunktes B über der Ebene der Papierbahn 1 entspricht. Im einfachsten Fall kann daher zur Fokussierung des Laserstrahls eine halbzylindrisch ausgebildete Sammellinse verwendet werden, die parallel zur Rotationsachse der Trägerwalze 10 so unterhalb davon angebracht ist, daß der abgelenkte Laserstrahl stets hindurchverläuft. In Fig. 3B ist eine mögliche Position der Linse L angedeutet. Aufgrund der gleichmässigen parallelen Verschiebung des abgelenkten Laserstrahls kann die Linse L zur Fokussierung des Laserstrahls den sehr einfachen halbzylindrischen Aufbau besitzen. Ferner können einfach aufgebaute Masken zur Beeinflussung des Laserstrahls ebenfalls im Bereich der Linse L vorgesehen werden.

Bei der in Fig. 4 dargestellten Ausgestaltung der erfindungsgemäßen Vorrichtung zur Führung eines Laserstrahls wird das Laserlicht ohne Hinzufügen einer Linsenanordnung fokussiert. An der Trägerwalze 10 is dazu ein Spiralband 12 angebracht, dessen reflektierende Fläche 11 als Hohlspiegel ausgebildet ist. Die gewölbte, reflektierende Fläche 11 bündelt das Laserlicht und fokussiert es auf die Ebene der Papierbahn 1. Die Fokussierung kann gleichbleibend über die gesamte Länge des Spiralbandes 12 oder auch abschnittsweise verschieden ausgebildet sein. Durch diese Anordnung ist eine gute Anpassbarkeit der Fokussierung an die durch die angestrebte Bearbeitung aufgestellten Anforderungen erzielbar.

In Fig. 5 ist der wesentliche Aspekt der Erfindung dargestellt, wonach die reflektierende Fläche 11 nur bereichsweise radial aus der Mantelfläche herausragt. In anderen Bereiche ist die reflektierende Fläche 11 bezogen auf die radiale Ausrichtung geneigt. In Fig. 5 sind drei Stellungen der reflektierenden Fläche 11 gezeigt, von denen die mittlere radial ausgerichtet und zwei dazu geneigt sind. Die Neigung der reflektierenden Fläche 11 ändert sich vorzugsweise kontinuierlich; sie kann aber auch abschnittsweise konstant sein. Die geneigte Anordnung der reflektierenden Fläche 11 führt zu einer Ablenkung des Laserstrahls, die im folgenden genauer beschrieben wird.

Da die zu bearbeitende Papierbahn beim Einbringen der Perforationsschnitte in der Regel nicht stillsteht, sondern vielmehr hohe Bahngeschwindigkeiten in Richtung des Pfeiles 2 in Fig. 1A auftreten, führt eine Laserbearbeitung senkrecht zur Bewegung der Papierbahn selbst bei sehr hohen Schnittgeschwindigkeiten zu schräg verlaufenden Perforationen. Die Schrägstellung der Perforationen kann vermieden werden, wenn der Laserstrahl 4 während der Schnittbearbeitung ebenfalls mit der Bahngeschwindigkeit der Papierbahn in Richtung des Pfeiles 2 bewegt wird.

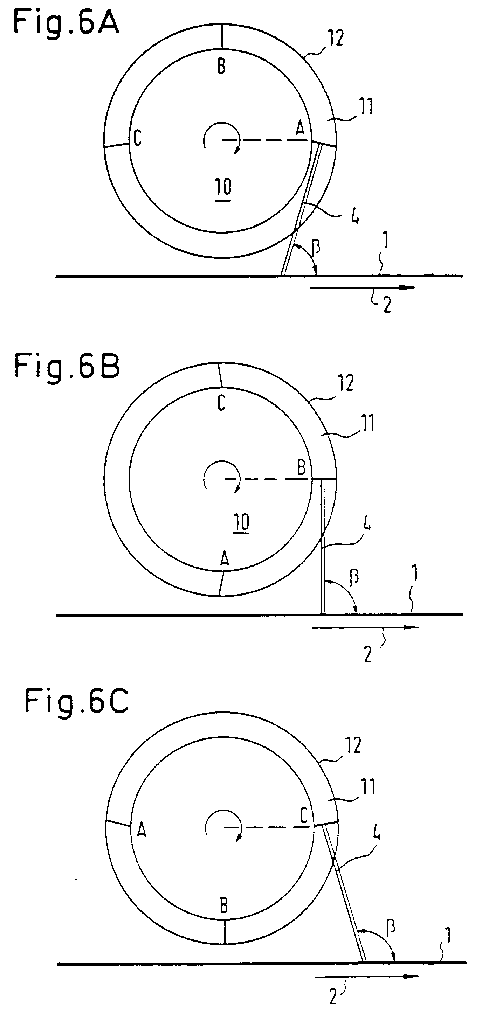

Wie in den Figuren 6A bis 6C dargestellt, kann diese Bewegung des abgelenkten Laserstrahls 4 dadurch erreicht werden, daß die reflektierende Fläche 11 nicht radial zur Manteloberfläche der Trägerwalze 10 verläuft, sondern sich ihre Stellung bezogen auf eine radiale Ausrichtung kontinuierlich ändert. Zur Veranschaulichung dieser Änderung der Stellung der reflektierenden Fläche 11 sind in den Figuren 6A, 6B und 6C jeweils unterschiedliche Drehstellungen der Walze 10 dargestellt.

In Fig. 6A ist die reflektierende Fläche 11 des Spiralbandes 12 derart geneigt, daß der abgelenkte Laserstrahl 4 entgegen der Richtung des Pfeiles 2, d.h. entgegen der Bewegungsrichtung der Papierbahn 1, abgelenkt wird. Der Winkel beta ist kleiner als 90°; sein kleinster Wert sollte 65° aber nicht unterschreiten, da sonst die Schnitttiefe im Papier zu stark ansteigt. Wird die Trägerwalze 10 gedreht, ändert der abgelenkte Laserstrahl 4 kontinuierlich seine Lage und erreicht die Stellung, die in Fig. 6B dargestellt ist. Der abgelenkte Laserstrahl 4 trifft senkrecht auf die Papierbahn 1 auf, d.h. der Winkel beta beträgt 90°. Im weiteren Verlauf der Drehung der Walze 10 ändert sich die Stellung der reflektierenden Fläche 11 kontinuierlich so, daß der abgelenkte Laserstrahl 4 schließlich die in Fig. 6C gezeigte Stellung einnimmt. Der abgelenkte Laserstrahl 4 trifft unter einem Winkel beta auf die Papierbahn 1 auf, der größer als 90° ist. Der maximale Wert des Winkels beta sollte 115° nicht übersteigen, um die Schnitttiefe im Papier nicht zu groß werden zu lassen.

Die Drehgeschwindigkeit und die kontinuierliche Änderung des Winkels der Flächennormalen auf die Längssymmetrielinie der reflektierenden Fläche 11 mit der Papierbahn 1 bestimmen die Geschwindigkeit, mit der sich der abgelenkte Laserstrahl 4 aus der Anfangsstellung, etwa gemäß Fig. 6A, über die senkrechte Stellung, gemäß Fig. 6B, in die Endstellung, etwa gemäß Fig. 6C, bewegt.

Zwar weicht der Winkel beta bei der zuvor beschriebenen Art der Laserstrahlführung von der erwünschten senkrechten Ausrichtung ab und überstreicht einen Bereich von vorzugsweise 65 bis 115°. Jedoch sind diese Änderungen und die damit verbundene Verlängerung der Schnittlänge im Papier tolerierbar. Denn durch das Vor- bzw. Nacheilen des Laserstrahls, d.h. durch die Anpassung des abgelenkten Laserstrahls an die Bewegung der Papierbahn ist es möglich, eine Papierbahn in der Bewegung zu bearbeiten, ohne daß eine Verlangsamung oder ein Anhalten der Papierbahn erforderlich ist.

Neben einer Neigung der reflektierenden Fläche bezogen auf die radiale Ausrichtung kann eine kontinuierliche Fokussierung mit Hilfe einer hohlspiegelartigen Ausbildung der reflektierenden Fläche 11, wie etwa in Fig. 4 dargestellt, durchgeführt werden. Da sich aufgrund der Schrägstellung des abgelenkten Laserstrahls 4 der Abstand zwischen dem Ablenkpunkt B auf der reflektierenden Fläche 11 und dem Auftreffpunkt A auf der Papierbahn 1 kontinuierlich ändert, ist vorteilhaft der Brennpunktabstand der hohlspiegelartig ausgebildeten reflektierenden Fläche 11 geeignet angepaßt, so daß der abgelenkte Laserstrahl 4 stets auf die Papierbahn 1 fokussiert wird.

In einer konkreten Realisierung der Vorrichtung zur Führung eines Laserstrahls wurde eine 500 mm breite Walze mit einem Umfang von 1000 mm angefertigt. An dieser Walze waren zwei Spiralbänder mit einer Höhe und einer Breite von jeweils 10 mm so angebracht, daß der Winkel zwischen dem Spiralband und der Spiegellängsachse 45° betrug. Der Winkel der Flächennormalen auf die Längssymmetrielinie der reflektierenden Fläche des Spiralbandes mit der Papierbahn war variabel zwischen 75 und 105° in Längsrichtung des Zylinders ausgebildet, um durch ein dadurch bewirktes Vorbzw. Nacheilen des abgelenkten Laserstrahls die Vorschubbewegung des Papiers auszugleichen. Die Brennweite der reflektierenden Fläche auf dem Spiralband betrug 250 mm mit Abweichungen kleiner als 50 µm. Die Streuung des abgelenkten Laserstrahls in der Brennebene war kleiner als 50 µm. Trägerwalze und Spiralbänder waren aus 98% reinem Cu ausgeführt.

Anders als bei den oben beschriebenen Ausführungsbeispielen wurden bei der Realisierung die Trägerwalze und die Spiralbänder in einem Arbeitsgang aus einem zylindrischen Rohkörper einstückig gefertigt, um ein vollkommen spannungsfreies Anliegen des Spiralbandes an der Walze zu gewährleisten. Bei Schneidbearbeitung einer Materialbahn mit Hilfe eines Laserstrahls tritt eine nicht unerhebliche thermische Belastung auf, die zu Materialspannungen führt. Um diese so klein wie möglich zu halten, ist eine einstückige Anfertigung von Walze und Spiralband zu bevorzugen. Auf diesem Weg wird eine optimale Wäremableitung aus dem Spiralband in die Walze gewährleistet. Die Wärmeableitung wird ferner durch die Materialwahl unterstützt.

In anderen Anwendungsfällen, etwa beim Einsatz der erfindungsgemäßen Vorrichtung zum Abtasten einer Oberfläche mit Hilfe eines Laserstrahls oder bei der Anwendung niederenergetischer Laser kann die eingangs beschriebene Ausführung eingesetzt werden, bei der Walze und Spiralband getrennt angefertigt werden.

Vorzugsweise ist die Walze in schwingungsgedämpften Nadellagern gelagert, um Abweichungen von der geforderten Genauigkeit der Strahlführung zu verhindern. Ferner wird die Walze vorzugsweise durch ein stufenlos regulierbares Getriebe angetrieben, wobei die Anpassung an die Geschwindigkeit der vorbeilaufenden Materialbahn über ein Abtasten der Bahn erfolgt. Der Abstand zwischen der Aufnahme der Regelgröße und Ort der Laserstrahlbewegung quer zur Materialbahn sollte bei Materialien mit niedrigem E-Modul so kurz wie möglich gehalten werden, um die Auswirkungen eines Schwingens innerhalb der Materialbahn in Laufrichtung auszuschalten. In der zuvor beschriebenen Realisierung der erfindungsgemäßen Vorrichtung befand sich die Stelle der Regelgrößenaufnahme ca. 40 cm vor der Stelle, an der der Laserstrahl über die Papierbahn geführt wurde. Ein hochauflösender Geschwindigkeitsmesser gab die Regelgröße zur Steuerung des Getriebes für die Trägerwalze ab.

## Patentansprüche

1. Vorrichtung zur Führung eines Laserstrahls, insbesondere zur Ablenkung eines Laserstrahls bei der Bearbeitung einer Materialbahn, mit

   - einer zylindrischen Trägerwalze (10) und
   - zumindest einer reflektierenden Fläche (11),

      -- die sich auf der Mantelfläche der Trägerwalze (10) entlang einer spiralförmigen Bahn erstreckt und
      -- die im wesentlichen radial aus der Mantelfläche der Trägerwalze (10) herausragt,

   dadurch gekennzeichnet, daß

   - die reflektierende Fläche (11) bezogen auf die radiale Ausrichtung geneigt ist.

2. Vorrichtung zur Führung eines Laserstrahls nach Anspruch 1, dadurch gekennzeichnet, daß die Neigung zwischen -25° und +25° beträgt.

3. Vorrichtung zur Führung eines Laserstrahls nach Anspruch 1 oder 2, dadurch gekennzeichnet, daß die spiralförmige Bahn einen Winkel von 45° mit der Längsachse der Trägerwalze (10) einnimmt.

**4.** Vorrichtung zur Führung eines Laserstrahls nach einem der Ansprüche 1 bis 3, dadurch gekennzeichnet, daß sich die reflektierende Fläche (11) einmal um die Trägerwalze (10) herum erstreckt.

**5.** Vorrichtung zur Führung eines Laserstrahls nach einem der Ansprüche 1 bis 4, dadurch gekennzeichnet, daß die reflektierende Fläche (11) an der einen Stirnseite der Trägerwalze (10) beginnt und an der anderen Stirnseite der Trägerwalze (10) endet.

**6.** Vorrichtung zur Führung eines Laserstrahls nach einem der Anprüche 1 bis 5, dadurch gekennzeichnet, daß die reflektierende Fläche (11) Teil eines spiralförmig angeordneten Bandes (12) ist, das auf der Mantelfläche der Trägerwalze (10) angeordnet ist.

**7.** Vorrichtung zur Führung eines Laserstrahls nach einem der Ansprüche 1 bis 5, dadurch gekennzeichnet, daß die reflektierende Fläche (11) einstückig mit der Trägewalze (10) ausgebildet ist.

**8.** Vorrichtung zur Führung eines Laserstrahls nach einem der Ansprüche 1 bis 7, dadurch gekennzeichnet, daß die reflektierende Fläche (11) als Hohlspiegel zur Fokussierung des Laserstrahls ausgebildet ist.

**9.** Vorrichtung zur Führung eines Laserstrahls nach einem der Ansprüche 1 bis 8, dadurch gekennzeichnet, daß die reflektierende Fläche (11) kontinuierlich ausgebildet ist.

**10.** Vorrichtung zur Führung eines Laserstrahls nach einem der Ansprüche 1 bis 9, dadurch gekennzeichnet, daß die reflektierende Fläche (11) segmentiert ausgebildet ist.

**11.** Vorrichtung zur Führung eines Laserstrahls nach einem der Ansprüche 1 bis 10, dadurch gekennzeichnet, daß die Trägerwalze (10) in schwingungsgedämpften Nadellagern gelagert ist.

**12.** Vorrichtung zur Führung eines Laserstrahls nach einem der Ansprüche 1 bis 11, dadurch gekennzeichnet, daß die Trägerwalze (10) durch ein stufenlos regulierbares Getriebe angetrieben wird.

**13.** Laserbearbeitungsvorrichtung mit einer Vorrichtung zur Führung eines Laserstrahls nach einem der Ansprüche 1 bis 12, dadurch gekennzeichnet, daß bei der Bearbeitung der Materialbahn eine Laserlichtquelle (5) derart angeordnet ist, daß der Laserstrahl (4) parallel zur Längsachse der Trägerwalze (10) und in der Nähe der Manteloberfläche der Trägerwalze (10) so verläuft, daß er auf die reflektierende Fläche (11) auftrifft.

**14.** Laserbearbeitungsvorrichtung nach Anspruch 13, gekennzeichnet durch eine Linsenanordnung (L), die im Bereich des abgelenkten Laserstrahls (4) zu dessen Fokussierung angeordnet ist.

**15.** Laserbearbeitungsvorrichtung nach Anspruch 13, gekennzeichnet durch eine den Laserstrahl beeinflussende Einrichtung, die im Bereich des abgelenkten Laserstrahls (4) angeordnet ist.

**Claims**

**1.** Device for guiding a laser beam, especially for deflecting a laser beam in the treatment of a material web, having

- a cylindrical supporting drum (10) and
- at least one reflecting surface (11),

   -- which extends along a helical path on the outer surface of the supporting drum (10), and
   -- which projects essentially radially from the outer surface of the supporting drum (10),

characterised in that

- the reflecting surface (11) is inclined at an angle to the radial orientation.

**2.** Device for guiding a laser beam according to Claim 1, characterised in that the inclination amounts to between -25° and +25°.

**3.** Device for guiding a laser beam according to Claim 1 or 2, characterised in that the helical path subtends an angle of 45° at the longitudinal axis of the supporting drum (10).

**4.** Device for guiding a laser beam according to one of the Claims 1 to 3, characterised in that the reflecting surface (11) extends once around the supporting drum (10).

**5.** Device for guiding a laser beam according to one of the Claims 1 to 4, characterised in that the reflecting surface (11) begins at the end face of the supporting drum (10) and ends at the other end face of the supporting drum (10).

**6.** Device for guiding a laser beam according to one of the Claims 1 to 5, characterised in that the reflecting surface (11) is part of a helically arranged strip (12) which is arranged on the outer surface of the supporting drum (10).

**7.** Device for guiding a laser beam according to one of the Claims 1 to 5, characterised in that the reflecting surface (11) is constructed in one piece with the supporting drum (10).

8. Device for guiding a laser beam according to one of the Claims 1 to 7, characterised in that the reflecting surface (11) is constructed as a concave mirror for focusing the laser beam.

9. Device for guiding a laser beam according to one of the Claims 1 to 8, characterised in that the reflecting surface (11) is constructed to be continuous.

10. Device for guiding a laser beam according to one of the Claims 1 to 9, characterised in that the reflecting surface (11) is constructed in segments.

11. Device for guiding a laser beam according to one of the Claims 1 to 10, characterised in that the supporting drum (10) is mounted in vibration-damped needle bearings.

12. Device for guiding a laser beam according to one of the Claims 1 to 11, characterised in that the supporting drum (10) is driven by a continuously variable drive.

13. Laser treatment device having a device for guiding a laser beam according to one of the Claims 1 to 12, characterised in that in the treatment of the material web a laser light source (5) is arranged such that the laser beam (4) extends parallel to the longitudinal axis of the supporting drum (10) and in the vicinity of the outer surface of the supporting drum (10) so that it strikes the reflecting surface (11).

14. Laser treatment device according to Claim 13, characterised by a lens arrangement (L) which is arranged in the region of the deflected laser beam (4) to focus the latter.

15. Laser treatment device according to Claim 13, characterised by a device affecting the laser beam which is arranged in the region of the deflected laser beam (4).

**Revendications**

1. Dispositif destiné à guider un rayon laser, notamment à dévier un rayon laser lors du traitement d'une nappe de matériau, le dispositif comportant

   - un rouleau porteur (10) cylindrique, et
   - au moins une surface réfléchissante (11)

      -- qui s'étend sur la surface périphérique du rouleau porteur (10), le long d'une trajectoire de forme hélicoïdale, et
      -- qui fait saillie sensiblement de manière radiale hors de la surface périphérique du rouleau porteur (10),

caractérisé en ce que la surface réfléchissante (11) est inclinée relativement à l'orientation radiale.

2. Dispositif destiné à guider un rayon laser selon la revendication 1, caractérisé en ce que l'inclinaison a une valeur comprise entre -25° et +25 °.

3. Dispositif destiné à guider un rayon laser selon la revendication 1 ou 2, caractérisé en ce que la trajectoire de forme hélicoïdale forme un angle de 45 ° avec l'axe longitudinal du rouleau porteur (10).

4. Dispositif destiné à guider un rayon laser selon l'une des revendications 1 à 3, caractérisé en ce que la surface réfléchissante (11) s'étend sur un tour autour du rouleau porteur (10).

5. Dispositif destiné à guider un rayon laser selon l'une des revendications 1 à 4, caractérisé en ce que la surface réfléchissante (11) débute au niveau de l'une des faces frontales du rouleau porteur (10) et se termine au niveau de l'autre face frontale du rouleau porteur (10).

6. Dispositif destiné à guider un rayon laser selon l'une des revendications 1 à 5, caractérisé en ce que la surface réfléchissante (11) fait partie d'une bande (12) agencée en forme d'hélice et disposée sur la surface périphérique du rouleau porteur (10).

7. Dispositif destiné à guider un rayon laser selon l'une des revendications 1 à 5, caractérisé en ce que la surface réfléchissante (11) est formée d'un seul tenant avec le rouleau porteur (10).

8. Dispositif destiné à guider un rayon laser selon l'une des revendications 1 à 7, caractérisé en ce que la surface réfléchissante (11) est réalisée sous forme de miroir concave pour focaliser le rayon laser.

9. Dispositif destiné à guider un rayon laser selon l'une des revendications 1 à 8, caractérisé en ce que la surface réfléchissante (11) est de configuration continue.

10. Dispositif destiné à guider un rayon laser selon l'une des revendications 1 à 9, caractérisé en ce que la surface réfléchissante (11) est de configuration segmentée.

11. Dispositif destiné à guider un rayon laser selon l'une des revendications 1 à 10, caractérisé en ce que le rouleau porteur (10) est monté dans des roulements à aiguilles à amortissement des vibrations.

12. Dispositif destiné à guider un rayon laser selon l'une des revendications 1 à 11, caractérisé en ce que le rouleau porteur (10) est entraîné par une transmission réglable en continu.

13. Dispositif de traitement à laser comprenant un dispositif destiné à guider un rayon laser selon l'une des revendications 1 à 12, caractérisé en ce que lors du traitement de la nappe de matériau, une source de lumière laser (5) est agencée de manière telle, que le rayon laser (4) chemine parallèlement à l'axe longitudinal du rouleau porteur (10) et à proximité de la surface extérieure périphérique du rouleau porteur (10), de façon à être incident sur la surface réfléchissante (11).

14. Dispositif de traitement à laser selon la revendication 13, caractérisé par un agencement de lentilles (L), qui est disposé dans la zone du rayon laser (4) dévié, en vue de le focaliser.

15. Dispositif de traitement à laser selon la revendication 13, caractérisé par un dispositif influençant le rayon laser, et disposé dans la zone du rayon laser (4) dévié.

# Fig.1A

# Fig.1B

Fig. 2

Fig. 3A

Fig. 3B

# Fig.4

# Fig.5

## Fig.6A

## Fig.6B

## Fig.6C